# FASCICULE DE BREVET EUROPEEN

(11) **EP 4 260 599 B1**
(45) Date de publication et mention de la délivrance du brevet: **03.06.2026**
(21) Numéro de dépôt: 21834787.0
(22) Date de dépôt: 08.12.2021
(51) Int. Cl.: H04W 24/08, H04W 24/04, H04L 41/142, H04L 41/147, H04L 43/0864, H04L 41/16

(54) **PROCÉDÉ ET PASSERELLE POUR DÉTECTER ET DIAGNOSTIQUER DES LENTEURS DANS UN RÉSEAU LOCAL DE COMMUNICATION SANS FIL**
VERFAHREN UND GATEWAY ZUR ERKENNUNG UND DIAGNOSE VON LANGSAMKEIT IN EINEM DRAHTLOSEN LOKALEN KOMMUNIKATIONSNETZ
METHOD AND GATEWAY FOR DETECTING AND DIAGNOSING SLOWNESS IN A WIRELESS LOCAL COMMUNICATION NETWORK

(30) Priorité: 14.12.2020 FR 2013193
(43) Date de publication de la demande: 18.10.2023
(73) Titulaire: Softathome, 92700 Colombes (FR)
(72) Inventeur: AOUINI, Zied, 75015 PARIS (FR)
(74) Mandataire: IPAZ
(86) Numéro de dépôt international: PCT/EP2021/084840
(87) Numéro de publication internationale: WO 2022/128693

(56) Documents cités:
- WO-A1-2016/115406
- JULIE GERLINGS ET AL: "Reviewing the Need for Explainable Artificial Intelligence (xAI)", ARXIV.ORG, CORNELL UNIVERSITY LIBRARY, 201 OLIN LIBRARY CORNELL UNIVERSITY ITHACA, NY 14853, 2 December 2020 (2020-12-02), XP081865861
- AOUINI ZIED ET AL: "Traffic monitoring in home networks: Enhancing diagnosis and performance tracking", 2016 13TH INTERNATIONAL CONFERENCE ON NEW TECHNOLOGIES FOR DISTRIBUTED SYSTEMS (NOTERE), IEEE, 18 July 2016 (2016-07-18), pages 1 - 6, XP033004800, DOI: 10.1109/NOTERE.2016.7745825
- CHEN XIAN ET AL: "MobiCom 2010 Poster: Passive Online Wireless LAN Health Monitoring from a Single Measurement Point *", 31 October 2010 (2010-10-31), pages 1 - 3, XP055835996, Retrieved from the Internet <URL:https://dl.acm.org/doi/pdf/10.1145/1942268.1942276> [retrieved on 20210830]

## Description

### Domaine technique

La présente invention concerne un procédé pour détecter et diagnostiquer des lenteurs dans un réseau local de communication sans fil. Elle concerne également une passerelle pour détecter et diagnostiquer des lenteurs dans un réseau local de communication sans fil.

Un tel dispositif permet au fournisseur d'accès de répondre plus rapidement à la demande de l'utilisateur lorsque des lenteurs apparaissent sur le réseau local sans fil. Le domaine de l'invention est plus particulièrement celui des réseaux sans fils.

### Etat de la technique antérieure

Actuellement, la complexité des réseaux domestiques grandit rapidement en termes de topologie et de services fournis. La topologie du réseau local domestique évolue d'une topologie en étoile classique à une topologie en arbre ou maillée plus complexe du fait qu'il y a de plus en plus d'équipements connectés via des technologies de connectivité variées et hétérogènes. De plus, le réseau domestique fournit des services variés comme la téléphonie, l'IPTV, la vidéo à la demande, la domotique, les jeux en ligne, l'e-Santé, etc. Ces services sont en concurrence avec de multiples applications Web du client (Facebook, Skype, YouTube, etc.) ce qui conduit potentiellement à des problèmes de qualité de service. En outre, seuls quelques appareils du réseau domestique (la passerelle domestique, le décodeur TV et quelques HNIDSs) sont contrôlés par le Fournisseur d'Accès Internet (FAI), ce qui rend l'opération de gestion et de suivi plus délicate pour l'opérateur.

Dans ce contexte, quand un utilisateur est confronté à des soucis de performance, le fournisseur d'accès internet peut difficilement détecter et diagnostiquer cette dégradation. Ceci impacte négativement la satisfaction client et génère des coûts pour le fournisseur (taux d'appels de clients insatisfaits).

Le délai de transmission des trames de bout en bout est une composante principale du ressenti de l'utilisateur. Plusieurs études ont démontré l'impact de ce délai sur le ressenti de l'utilisateur final. Des études ont montré qu'un délai supérieur à 100 millisecondes dégrade fortement l'expérience des joueurs en ligne. Cette observation est confirmée aussi bien sur les services de Voix sur IP qu'avec la navigation sur des sites web.

De plus, dans le cas des configurations sans fil, le délai d'un réseau local varie en fonction de plusieurs facteurs. Des études sur la relation existante entre certains facteurs radio et le délai du réseau local mesuré d'une manière active ont démontré une relation non linéaire entre ces facteurs et la variation du délai. Cette non-linéarité rend une modélisation classique de cette relation impossible.

Document WO2016/115406 divulgue un procédé de diagnostique de lenteurs dans un réseau WiFi qui consiste en: mesurer passivement des statistiques de la connexion TCP, déterminer des métriques de connexion, traitement desdites mesures en le regroupant et l'utilisation d'un modèle AI pour prédire l'état de lenteur du réseau et classifier la qualité des lien en 'bonne' ou 'mauvaise'.

Par conséquent, le but de la présente invention est de résoudre au moins un des inconvénients susmentionnés avec une modélisation plus complexe qui se base sur les techniques dites d'intelligence artificielle.

### Exposé de l'invention

On atteint au moins un but de l'invention avec un procédé pour détecter et diagnostiquer des lenteurs dans un réseau local de communication sans fil, ce réseau local comprenant des stations sans fil et une passerelle pour communiquer avec un réseau externe, ce procédé comprenant les étapes suivantes :
- mesure passive de délais d'établissement de session entre chaque station sans fil et le réseau externe,
- mesure passive de métriques relatives à un module sans fil de la passerelle et de métriques relatives à la connexion sans fil de chaque station,
- traitement desdites mesures par un système de collecte pour former au moins un vecteur unique regroupant lesdites mesures à chaque instant t donné,
- utilisation d'un modèle d'intelligence artificielle explicable permettant de prédire l'état du réseau local à partir des métriques contenues dans le vecteur unique de façon à définir si l'état du réseau est en situation de lenteur ou non,
- comparaison entre la prédiction de l'état du réseau local et un état réel obtenu à partir des mesures passives de délais,
- dans le cas où l'état du réseau est en situation de lenteur, une identification des métriques responsables de la lenteur est réalisée à partir du modèle d'intelligence artificielle explicable.

Avantageusement, le procédé fonctionne en temps réel afin de permettre une action réparatrice par le fournisseur d'accès internet au plus tôt. De manière encore plus avantageuse, le procédé est autonome.

On entend par « intelligence artificielle explicable », une forme d'intelligence artificielle prévue pour décrire son objet, sa logique et sa prise de décision de manière intelligible. La technique d'intelligence artificielle explicable est utilisée afin de réaliser un apprentissage statistique supervisé qui permet une classification binaire des différents cas en fonction des mesures WIFI contenues dans le vecteur. L'utilisation d'un modèle d'intelligence artificielle explicable permet également de donner un diagnostic automatique pour les cas de lenteurs observés sur la station, permettant une identification des métriques responsables de la lenteur.

On entend « par sonde passive », un dispositif matériel ou logiciel apte à détecter des trames transitant via la passerelle. Cette détection se base uniquement sur l'observation des trames qui traversent la passerelle et ne génère aucun trafic supplémentaire, dit de mesure (sonde active).

Un module sans fil peut par exemple être une interface Wifi dans la passerelle pour la communication sans fil avec les stations sans fil.

Avantageusement, les délais mesurés peuvent correspondre à un délai de réseau local et à un délai de réseau externe, le délai de réseau local et externe correspondant à la différence temporelle entre des trames en fonction de leur direction de transit. La différence temporelle mesurée entre une trame sortante vers le réseau externe et une trame entrante depuis ce réseau correspond au délai observé sur ce réseau externe. Par la même logique, la différence temporelle entre une trame entrante depuis un réseau externe et une trame sortante vers celui-ci, correspond au délai du réseau local. Un exemple de mise en œuvre dans le cas du protocole de transport TCP est : le délai du réseau local correspond à la différence temporelle entre la trame SYN/ACK et ACK, le délai de réseau externe correspondant à la différence temporelle entre des trames SYN et SYN/ACK. Les mesures de délais se font passivement sur les connections qui transitent par la passerelle. Un résumé de ces mesures peut être remonté de manière périodique, la période étant égale à 300 secondes et/ou comprise entre 1 seconde et 360 secondes.

Le fait de se baser uniquement sur les trames d'établissement TCP permet au procédé de fonctionner dans le cas d'une observabilité des trames limitée (accélération matérielle de la transmission des trames). De plus, l'envoi et la réception de ce type de trames sont gérés au niveau de la pile réseau des stations. Par conséquent, le délai dû à l'application tournant sur la station est éliminé.

De préférence, les vecteurs uniques peuvent être stockés sur une période glissante comprise entre 1 jour et 3 mois. Les vecteurs uniques stockés peuvent être utilisés comme base d'apprentissage du modèle lors de sa première utilisation. L'entrainement du modèle permet une meilleure précision de prédiction du modèle lors de nouveaux cas entrants.

Avantageusement, l'état du réseau local peut être classé selon deux catégories en fonction d'un seuil défini. Les deux catégories de l'état du réseau local peuvent être : dégradé et non-dégradé. Le seuil défini peut être égal à 100 millisecondes. D'autres types de catégories peuvent être définies selon le cas à détecter sur le réseau.

La comparaison entre la prédiction de l'état du réseau local et l'état réel obtenu à partir des mesures passives de délais peut être réalisée en continue afin de mesurer une performance du modèle et définir son évolution.

Un seuil préalable peut être défini, le seuil défini étant comparé aux mesures de performance du modèle, le procédé pouvant être relancé automatiquement sur un nouvel ensemble de données si la mesure de performance du modèle est inférieure au seuil. Le seuil défini peut être égal à 75% et/ou compris entre 50% et 90%.

Avantageusement, les mesures passives peuvent être réalisées par des sondes disposées dans la passerelle, le modèle et les traitements liés au modèle pouvant être mis en œuvre dans le système de collecte ou dans la passerelle. Les mesures sont faites de manière passive par les sondes afin de ne pas introduire de trafic de mesure supplémentaire.

De préférence, le système de collecte peut être distant.

Les métriques relatives à un module sans fil de la passerelle peuvent comprendre au moins :
- une force de signal sur le module sans fil,
- un nombre d'intervalles de temps occupé dus à la présence de stations sans fil,
- une bande de fréquence utilisée,
- un nombre d'intervalles de temps occupé dus à la présence de stations filaires,
- un identifiant d'un canal utilisé,
- un nombre de trames retransmises,
- un débit de synchronisation,
- un débit de transmission dans les sens montant et descendant,
- un nombre d'intervalles disponibles pour l'envoi,
- un nombre de points d'accès sans fil scannés sur un canal en cours d'utilisation,
- un nombre de points d'accès sans fil scannés sur des canaux adjacents au canal en cours d'utilisation,
- un nombre de trames et/ou octets envoyées,
- des informations sur la détection de radar,
- une force d'émission par antenne du module sans fil.

On entend par « détection de radar », les radars militaires scannés par les passerelles WIFI, le scan étant réalisé pour ne pas interférer avec les radars militaires.

Les métriques relatives à la connexion sans fil de chaque station peuvent comprendre au moins :
- un code fabricant de la carte sans fil de la station sans fil,
- le type de la station sans fil,
- un débit montant et /ou descendant négociés avec le module sans fil,
- une force du bruit radio mesuré,
- une bande de fréquence utilisée,
- un nombre de trames octets et/ou envoyées,
- un nombre de trames retransmises,
- une force de signal mesurée depuis la station sans fil,
- un horodatage de l'inactivité radio de la station sans fil.

Les mesures passives de délais peuvent être exportées vers le système de collecte avec un format d'export sans agrégation ou en utilisant une agrégation statistique des mesures par station sans fil. Dans le cas où les mesures passives de délais sont exportées vers le système de collecte avec un format d'export sans agrégation, la mesure de latence est envoyée brute. Avantageusement, l'export des mesures passives de délais sont exportées en utilisant une agrégation. L'utilisation d'une agrégation statistique permet de limiter la volumétrie coté système de collecte.

L'exportation avec agrégation peut être sur une période de temps donnée, la période de temps étant comprise entre 10 secondes et 30 minutes. L'agrégation peut être définie par rapport à un intervalle T et pour chaque station ayant généré un ensemble de flux allant d'un flux jusqu'au nombre total des flux mesurés durant l'intervalle T. La configuration de T permet de gérer la réactivité souhaitée du procédé.

Avantageusement, les mesures peuvent être périodiques. Les mesures telles que les mesures passives de métriques peuvent donc être périodiques, la période étant égale à 300 secondes et/ou comprise entre 1 seconde et 360 secondes.

Selon un deuxième aspect de l'invention, il est proposé une passerelle pour détecter et diagnostiquer des lenteurs dans un réseau local de communication sans fil, la passerelle étant équipée d'une unité de traitement pour mettre en œuvre les étapes du procédé.

Selon un troisième aspect de l'invention, il est proposé un produit programme d'ordinateur comprenant des instructions qui, lorsque le programme est exécuté par un ordinateur, conduisent celui-ci à mettre en œuvre les étapes du procédé.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
[Fig.1] illustre un réseau local domestique sans fil,
[Fig.2] illustre les mesures des délais pour chaque établissement TCP selon un mode de réalisation de l'invention,
[Fig.3] illustre un ordinogramme d'un procédé selon un mode de réalisation de l'invention.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

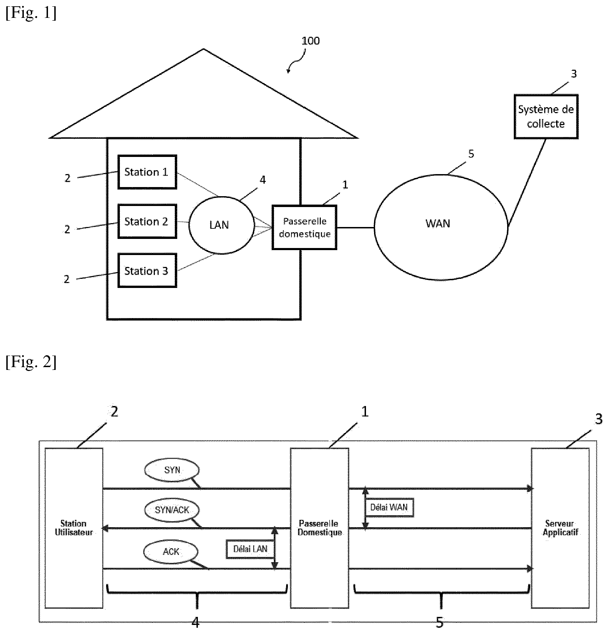

On va tout d'abord décrire, en référence à la [Fig.1], un réseau local domestique sans fil 100. Le centre du réseau est une passerelle domestique 1 distribuant une connexion internet aux différentes stations 2 connectées dans le domicile. La passerelle domestique 1 est placée dans le domicile, dans le salon par exemple. La passerelle domestique 1 est le point central de tous les flux : images, musique, vidéos etc. Chaque station 2 est reliée par un câble sans fil en WIFI ou par un câble Ethernet à la passerelle. La passerelle domestique 1 est connectée, d'un coté au réseau local 4, en anglais « Local Area Network » ou LAN du domicile et de l'autre côté, au réseau externe 5, en anglais « Wide Area Network » ou WAN. Le réseau local 4 désigne toute installation informatique interconnecté ou station 2 au sein du domicile de l'utilisateur comme par exemple, une télévision, une tablette, un téléphone portable ou encore une console de jeux. La présente invention se focalise sur le réseau local 4. Le réseau externe 5 est connecté à un système de collecte 3 distant. Le contexte du réseau local domestique est à titre d'exemple. Le procédé décrit par la présente invention est applicable à d'autres types de réseaux de communication sans fil, par exemple à un réseau universitaire, aux réseaux d'entreprises, etc.

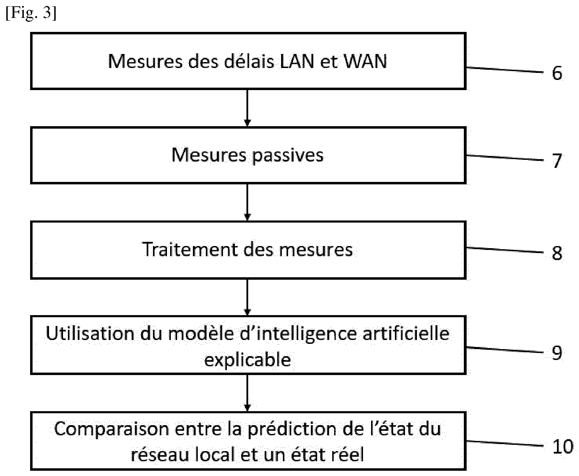

On va décrire, en référence aux figures 2 et 3, un procédé pour détecter et diagnostiquer des lenteurs dans le réseau local 4 de communication sans fil.

D'après la [Fig.3], le procédé est décomposé en cinq étapes. Dans un premier temps, une mesure passive de délais 6 d'établissement de session entre chaque station 2 sans fil et le réseau externe 5 est réalisée. D'après la [Fig.1], trois mesures de délais sont donc réalisées. La [Fig.2] illustre les mesures des délais pour chaque établissement TCP selon un mode de réalisation de l'invention. La [Fig.2] présente les liaisons établies entre une station 2, la passerelle 1 et le système de collecte 3.

La communication entre la passerelle 1, le serveur applicatif 3 et la station utilisateur 2 est initiée par transmission de trames : SYN, SYN/ACK et ACK.

La passerelle domestique 1 est équipée d'un ensemble de sondes passives comprenant une sonde de mesure des délais réseaux basée sur le trafic utilisateur envoyé par une station 2 et une sonde de collecte des métriques de performances WIFI de chaque station 2 sans fil associée et d'une interface WIFI présente sur la passerelle domestique 1. La sonde de mesure des délais observe l'établissement des sessions TCP de chaque station 2 de manière passive. Pour chaque session TCP observée, un délai WAN correspondant à la différence temporelle entre les trames SYN et SYN/ACK est mesuré ainsi qu'un délai LAN correspondant à la différence temporelle entre le les trames SYN/ACK et ACK (voir [Fig.2]). Le procédé est donc capable de mesurer le délai LAN et de le dissocier par rapport au délai WAN. Chaque mesure de délai est exportée et enregistrée pour chaque station 2 connectée dans le système de collecte distant 3. Les mesures passives de délais sont exportées vers le système de collecte 3 avec un format d'export utilisant une agrégation statistique des mesures par station 2 sans fil sur une période de temps donnée. Un histogramme comprenant le minimum, le maximum, la moyenne et la variance des mesures de latences observées sur la période est envoyé. Une agrégation peut se composer à titre d'exemple comme suit :
- Une clé pour identifier la station génératrice d'une manière unique (Adresse MAC, adresse IP),
- Minimum du délai LAN mesuré pour tout flux Fi exprimé en millisecondes (millisecondes),
- Maximum du délai LAN mesuré pour tout flux Fi, exprimé en millisecondes (millisecondes),
- Moyenne du délai LAN mesuré pour sur tout l'ensemble des flux Fi (millisecondes)
- Variance du délai LAN mesuré pour sur tout l'ensemble des flux Fi (millisecondes),
- Déviation standard du délai LAN mesuré pour sur tout l'ensemble des flux Fi (millisecondes),
- Médiane du délai LAN mesuré pour sur tout l'ensemble des flux Fi (millisecondes),
- Horodatage du premier Flux observé sur la période T,
- Horodatage du dernier Flux observé sur la période T.

D'après la [Fig.3], les mesures de délais sont suivies par la mesure passive de métriques 7 relatives à un module sans fil de la passerelle 1 et de métriques relatives à la connexion sans fil de chaque station 2. La sonde permettant de remonter les métriques des stations WIFI est disposée dans la passerelle 1. Les métriques remontées appartiennent à deux catégories : les mesures par interface radio présente sur la passerelle domestique 1 et les mesures par station 2 connectée à la passerelle domestique 1.

Les mesures, qui ont été réalisées de manière périodiques, sont ensuite traitées 8 par le système de collecte 3 puis regroupées pour former au moins un vecteur unique à chaque instant t donné. Les vecteurs uniques sont stockés dans le système de collecte 3. Un vecteur unique est donc composé d'au moins une mesure de délais et d'une mesure de métriques.

Un modèle d'intelligence artificielle explicable 9 est ensuite utilisé pour prédire l'état du réseau local 4 à partir des métriques contenues dans le vecteur unique. Le modèle et les traitements liés au modèle sont mis en œuvre dans le système de collecte 3. Les vecteurs uniques stockés dans le système de collecte 3 sont utilisés comme base d'apprentissage du modèle.

Une mesure du réseau local réel est réalisée. L'état du réseau local réel est classé selon deux catégories : « dégradé », dans le cas où la mesure est supérieure à cent millisecondes, ou dans le cas contraire, « non-dégradé ».

Une comparaison 10 entre la prédiction de l'état du réseau local 4 et son état réel obtenu à partir des mesures passives de délais est réalisée. Si l'état du réseau est considéré comme « dégradé », et que la prédiction de l'état du réseau local 4 correspond à l'état 4 réel mesuré, le fournisseur d'accès internet utilise alors l'explication du modèle comme diagnostique. Les métriques responsables de la lenteur sur le réseau local 4 sont déterminées et le fournisseur d'accès peut intervenir auprès de l'utilisateur plus rapidement. Dans le cas d'une station 2 connectée via un câble Ethernet, le délai LAN tend à être faible et une potentielle dégradation est généralement expliquée par des facteurs simples tels que la longueur et la qualité du câble.

Typiquement au moins un des moyens du dispositif selon l'invention précédemment décrits, de préférence chacun des moyens du dispositif selon l'invention précédemment décrit sont des moyens techniques.

Typiquement, chacun des moyens du dispositif selon l'invention précédemment décrits peuvent comprendre au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé pour détecter et diagnostiquer des lenteurs dans un réseau local (4) de communication sans fil, ce réseau local (4) comprenant des stations (2) sans fil et une passerelle (1) pour communiquer avec un réseau externe (5), ce procédé comprenant les étapes suivantes :
- mesure passive de délais d'établissement (6) de session entre chaque station (2) sans fil et le réseau externe (5) par une sonde de la passerelle (1), **caractérisé en ce que** le procédé comprend en outre les étapes suivantes :
- mesure passive de métriques (7) relatives à un module sans fil de la passerelle et de métriques relatives à la connexion sans fil de chaque station (2) par la sonde de la passerelle (1),
- traitement desdites mesures (8) par un système de collecte (3) pour former au moins un vecteur unique regroupant lesdites mesures à chaque instant t donné,
- utilisation d'un modèle d'intelligence artificielle explicable (9) permettant de prédire l'état du réseau local (4) à partir des métriques contenues dans le vecteur unique de façon à définir si l'état du réseau est en situation de lenteur ou non,
- comparaison (10) entre la prédiction de l'état du réseau local (4) et un état réel obtenu à partir des mesures passives de délais par le système de collecte (3),
- dans le cas où l'état du réseau est en situation de lenteur et que la prédiction de l'état du réseau local (4) correspond à l'état réel mesuré, une identification des métriques responsables de la lenteur est réalisée à partir du modèle d'intelligence artificielle explicable,
le modèle et les traitements liés au modèle étant mis en œuvre dans le système de collecte (3).

2. Procédé selon la revendication 1, dans lequel les délais mesurés correspondent à un délai de réseau local et à un délai de réseau externe, le délai de réseau local et externe correspondant à la différence temporelle entre des trames en fonction de leur direction de transit.

3. Procédé selon l'une quelconque des revendications précédentes, dans lequel les vecteurs uniques sont stockés sur une période glissante comprise entre 1 jour et 3 mois.

4. Procédé selon la revendication 3, dans lequel les vecteurs uniques stockés sont utilisés comme base d'apprentissage du modèle lors de sa première utilisation.

5. Procédé selon l'une quelconque des revendications précédentes, dans lequel l'état du réseau local (4) est classé selon deux catégories en fonction d'un seuil défini.

6. Procédé selon la revendication 5, dans lequel les deux catégories de l'état du réseau local (4) sont : dégradé et non-dégradé.

7. Procédé selon l'une quelconque des revendications précédentes, dans lequel la comparaison (10) entre la prédiction de l'état du réseau local (4) et l'état réel obtenu à partir des mesures passives de délais est réalisée en continue afin de mesurer une performance du modèle et définir son évolution.

8. Procédé selon la revendication 7, dans lequel un seuil préalable est défini, le seuil défini étant comparé aux mesures de performance du modèle, le procédé étant relancé automatiquement sur un nouvel ensemble de données si la mesure de performance du modèle est inférieure au seuil.

9. Procédé selon l'une quelconque des revendications précédentes, dans lequel le système de collecte (3) est distant.

10. Procédé selon l'une quelconque des revendications précédentes, dans lequel les métriques relatives à un module sans fil de la passerelle (1) comprennent au moins
- une force de signal sur le module sans fil,
- un nombre d'intervalles de temps occupé dus à la présence de stations (2) sans fil,
- une bande de fréquence utilisée,
- un nombre d'intervalles de temps occupé dus à la présence de stations filaires,
- un identifiant d'un canal utilisé,
- un nombre de trames retransmises,
- un débit de synchronisation,
- un débit de transmission dans les sens montant et descendant,
- un nombre d'intervalles disponibles pour l'envoi,
- un nombre de points d'accès sans fil scannés sur un canal en cours d'utilisation,
- un nombre de points d'accès sans fil scannés sur des canaux adjacents au canal en cours d'utilisation,
- un nombre de trames et/ou octets envoyées,
- des informations sur la détection de radar,
- une force d'émission par antenne du module sans fil.

11. Procédé selon l'une quelconque des revendications précédentes, dans lequel les métriques relatives à la connexion sans fil de chaque station (2) comprennent au moins :
- un code fabricant de la carte sans fil de la station (2) sans fil,
- le type de la station (2) sans fil,
- un débit montant et /ou descendant négociés avec le module sans fil,
- une force du bruit radio mesuré,
- une bande de fréquence utilisée,
- un nombre de trames octets et/ou envoyées,
- un nombre de trames retransmises,
- une force de signal mesurée depuis la station (2) sans fil,
- un horodatage de l'inactivité radio de la station (2) sans fil.

12. Procédé selon l'une quelconque des revendications précédentes, dans lequel les mesures passives de délais sont exportées vers le système de collecte (3) avec un format d'export sans agrégation ou en utilisant une agrégation statistique des mesures par station (2) sans fil.

13. Procédé selon l'une quelconque des revendications précédentes, dans lequel les mesures sont périodiques.

14. Système pour détecter et diagnostiquer des lenteurs dans un réseau local (4) de communication sans fil, comprenant une passerelle, des stations et un système de collecte, la passerelle et le système de collecte étant configurés pour mettre en œuvre les étapes du procédé selon l'une quelconque des revendications 1 à 13.

## Patentansprüche

1. Verfahren zum Erkennen und Diagnostizieren von Verlangsamungen in einem lokalen drahtlosen Kommunikationsnetzwerk (4), wobei dieses lokale Netzwerk (4) drahtlose Stationen (2) und ein Gateway (1) zum Kommunizieren mit einem externen Netzwerk (5) umfasst, wobei dieses Verfahren die folgenden Schritte umfasst:
- passive Messung von Sitzungsverzögerungszeiten (6) zwischen jeder drahtlosen Station (2) und dem externen Netzwerk (5) durch eine Sonde des Gateways (1),
**dadurch gekennzeichnet, dass** das Verfahren ferner die folgenden Schritte umfasst:
- passive Messung von Metriken (7) bezüglich einem drahtlosen Modul des Gateways und von Metriken bezüglich der drahtlosen Verbindung jeder Station (2) durch die Sonde des Gateways (1),
- Behandlung der Messungen (8) durch ein Sammelsystem (3), um mindestens einen eindeutigen Vektor zu bilden, der die Messungen zu jedem gegebenen Zeitpunkt t zusammenfasst,
- Verwendung eines erklärbaren Modells künstlicher Intelligenz (9), das es ermöglicht, den Zustand des lokalen Netzwerks (4) aus den in dem eindeutigen Vektor enthaltenen Metriken vorherzusagen, um zu bestimmen, ob sich der Zustand des Netzwerks in einer Situation von Langsamkeit befindet oder nicht,
- Vergleich (10) zwischen der Vorhersage des Zustands des lokalen Netzwerks (4) und einem realen Zustand, der aus den passiven Verzögerungsmessungen durch das Sammelsystem (3) erhalten wird,
- in dem Fall, in dem der Zustand des Netzwerks sich in einer Situation von Langsamkeit befindet und die Vorhersage des Zustands des lokalen Netzwerks (4) dem gemessenen realen Zustand entspricht, wird eine Identifizierung der für die Langsamkeit verantwortlichen Metriken aus dem erklärbaren Modell der künstlichen Intelligenz durchgeführt,
wobei das Modell und die mit dem Modell verbundenen Behandlungen in dem Sammelsystem (3) implementiert werden.

2. Verfahren nach Anspruch 1, wobei die gemessenen Verzögerungen einer lokalen Netzwerkverzögerung und einer externen Netzwerkverzögerung entsprechen, wobei die lokale und externe Netzwerkverzögerung der zeitlichen Differenz zwischen Frames in Abhängigkeit von ihrer Transitrichtung entspricht.

3. Verfahren nach einem der vorstehenden Ansprüche, wobei die eindeutigen Vektoren über einen gleitenden Zeitraum zwischen 1 Tag und 3 Monaten gespeichert werden.

4. Verfahren nach Anspruch 3, wobei die gespeicherten eindeutigen Vektoren als Lernbasis des Modells während seiner ersten Verwendung verwendet werden.

5. Verfahren nach einem der vorstehenden Ansprüche, wobei der Zustand des lokalen Netzwerks (4) gemäß zwei Kategorien in Abhängigkeit von einer definierten Schwelle klassifiziert wird.

6. Verfahren nach Anspruch 5, wobei die zwei Kategorien des Zustands des lokalen Netzwerks (4) sind: heruntergestuft und nicht heruntergestuft.

7. Verfahren nach einem der vorstehenden Ansprüche, wobei der Vergleich (10) zwischen der Vorhersage des Zustands des lokalen Netzwerks (4) und dem aus den passiven Verzögerungsmessungen erhaltenen realen Zustand kontinuierlich durchgeführt wird, um eine Leistung des Modells zu messen und seine Entwicklung zu definieren.

8. Verfahren nach Anspruch 7, wobei eine Vorschwelle definiert wird, wobei die definierte Schwelle mit den Leistungsmessungen des Modells verglichen wird, wobei das Verfahren automatisch auf einem neuen Datensatz neu gestartet wird, wenn die Leistungsmessung des Modells unter der Schwelle liegt.

9. Verfahren nach einem der vorstehenden Ansprüche, wobei das Sammelsystem (3) entfernt ist.

10. Verfahren nach einem der vorstehenden Ansprüche, wobei die Metriken bezüglich einem drahtlosen Modul des Gateways (1) mindestens umfassen:
- eine Signalstärke auf dem drahtlosen Modul,
- eine Anzahl von belegten Zeitintervallen aufgrund des Vorhandenseins von drahtlosen Stationen (2),
- ein verwendetes Frequenzband,
- eine Anzahl von belegten Zeitintervallen aufgrund des Vorhandenseins von drahtgebundenen Stationen,
- eine Kennung eines verwendeten Kanals,
- eine Anzahl von übertragenen Frames,
- eine Synchronisationsrate,
- eine Übertragungsrate im Upload und Download,
- eine Anzahl von verfügbaren Intervallen für die Übertragung,
- eine Anzahl von drahtlosen Zugangspunkten, die auf einem verwendeten Kanal gescannt wurden,
- eine Anzahl von drahtlosen Zugangspunkten, die auf den verwendeten Kanal benachbarten Kanälen gescannt wurden,
- eine Anzahl von gesendeten Frames und/oder Oktetten,
- Informationen über die Radardetektion,
- eine Sendestärke pro Antenne des drahtlosen Moduls.

11. Verfahren nach einem der vorstehenden Ansprüche, wobei die Metriken bezüglich der drahtlosen Verbindung jeder Station (2) mindestens umfassen:
- einen Herstellercode der drahtlosen Karte der drahtlosen Station (2),
- den Typ der drahtlosen Station (2),
- eine mit dem drahtlosen Modul ausgehandelte Upload- und/oder Downloadrate,
- eine Stärke des gemessenen Funkrauschens,
- ein verwendetes Frequenzband,
- eine Anzahl von Oktett-Frames und/oder gesendeten Frames,
- eine Anzahl von übertragenen Frames,
- eine von der drahtlosen Station (2) aus gemessene Signalstärke,
- einen Zeitstempel der Funkinaktivität der drahtlosen Station (2).

12. Verfahren nach einem der vorstehenden Ansprüche, wobei die passiven Verzögerungsmessungen zu dem Sammelsystem (3) mit einem Exportformat ohne Aggregation oder unter Verwendung einer statistischen Aggregation der Messungen pro drahtlose Station (2) exportiert werden.

13. Verfahren nach einem der vorstehenden Ansprüche, wobei die Messungen periodisch sind.

14. System zum Erkennen und Diagnostizieren von Verlangsamungen in einem lokalen drahtlosen Kommunikationsnetzwerk (4), umfassend ein Gateway, Stationen und ein Sammelsystem, wobei das Gateway und das Sammelsystem konfiguriert sind, um die Schritte des Verfahrens gemäß einem der Ansprüche 1 bis 13 zu implementieren.

## Claims

1. Method for detecting and diagnosing slowness in a local network (4) for wireless communication, said local network (4) comprising wireless stations (2) and a gateway (1) for communicating with an external network (5), said method comprising the following steps:
- passive measurement of session set-up delays (6) between each wireless station (2) and the external network (5) by a probe in the gateway (1), **characterized in that** the method further comprises the following steps:
- passive measurement of metrics (7) relating to a gateway wireless module and metrics relating to the wireless connection of each station (2) by the probe in the gateway (1),
- processing of said measurements (8) by a collection system (3) to form at least one unique vector grouping said measurements at each given time t,
- use of an explainable artificial intelligence model (9) to predict the state of the local network (4) from the metrics contained in the unique vector, so as to define whether the state of the network is slow or not,
- comparison (10) between the predicted state of the local network (4) and an actual state obtained from passive delay measurements by the collection system (3),
- if the network state is slow and the prediction of the state of the local network (4) corresponds to the actual measured state, the metrics responsible for the slowness are identified using the explainable artificial intelligence model,
the model and model-related processing being implemented in the collection system (3).

2. Method according to claim 1, wherein the measured delays correspond to a local network delay and an external network delay, the local and external network delay corresponding to the time difference between frames depending on their transit direction.

3. Method according to either of the preceding claims, wherein the unique vectors are stored over a sliding period of between 1 day and 3 months.

4. Method according to claim 3, wherein the stored unique vectors are used as a basis for training the model when it is first used.

5. Method according to any of the preceding claims, wherein the state of the local network (4) is classified into two categories according to a defined threshold.

6. Method according to claim 5, wherein the two categories of the state of the local network (4) are: degraded and non-degraded.

7. Method according to any of the preceding claims, wherein the comparison (10) between the predicted state of the local network (4) and the actual state obtained from passive delay measurements is carried out continuously in order to measure a performance of the model and define its evolution.

8. Method according to claim 7, wherein a prior threshold is defined, the defined threshold being compared with model performance measurements, the method being automatically restarted on a new data set if the model performance measurement is below the threshold.

9. Method according to any of the preceding claims, wherein the collection system (3) is remote.

10. Method according to any of the preceding claims, wherein the metrics relating to a wireless module of the gateway (1) comprise at least:
- a signal strength on the wireless module,
- a number of busy time intervals due to the presence of wireless stations (2),
- a frequency band used,
- a number of busy time intervals due to the presence of wired stations,
- a channel identifier used,
- a number of retransmitted frames,
- a synchronization rate,
- a transmission rate in upstream and downstream directions,
- a number of intervals available for sending,
- a number of wireless access points scanned on a channel in use,
- a number of wireless access points scanned on channels adjacent to the channel in use,
- a number of frames and/or bytes sent,
- information on radar detection,
- an antenna transmitting force of the wireless module.

11. Method according to any of the preceding claims, wherein the metrics relating to the wireless connection of each station (2) comprise at least:
- a manufacturer code for the wireless card in the wireless station (2),
- the type of the wireless station (2),
- an upload and/or download rate negotiated with the wireless module,
- a strength of the measured radio noise,
- a frequency band used,
- a number of byte frames and/or frames sent,
- a number of retransmitted frames,
- a signal strength measured from the wireless station (2),
- a time stamp of the radio inactivity of the wireless station (2).

12. Method according to any of the preceding claims, wherein passive delay measurements are exported to the collection system (3) in an export format without aggregation or using statistical aggregation of the measurements per wireless station (2).

13. Method according to any of the preceding claims, wherein the measurements are periodic.

14. System for detecting and diagnosing slowness in a local network (4) for wireless communication, comprising a gateway, stations and a collection system, the gateway and collection system being configured to implement the method steps according to any of claims 1 to 13.
